# EUROPEAN PATENT SPECIFICATION

(11) **EP 3 480 430 B1**
(45) Date of publication and mention of the grant of the patent: **30.10.2024**
(21) Application number: 18204187.1
(22) Date of filing: 02.11.2018
(51) Int. Cl.: F01D 5/14, F01D 5/34, B23P 15/00

(54) **INTEGRALLY BLADED ROTOR FOR A GAS TURBINE ENGINE AND METHOD OF FABRICATING AN INTEGRALLY BLADED ROTOR FOR A GAS TURBINE ENGINE**
INTEGRAL BESCHAUFELTER ROTOR FÜR EIN GASTURBINENTRIEBWERK UND VERFAHREN ZUR HERSTELLUNG EINES INTEGRAL BESCHAUFELTEN ROTORS FÜR EIN GASTURBINENTRIEBWERK
ROTOR À AUBAGE INTÉGRAL POUR UN MOTEUR À TURBINE À GAZ ET PROCÉDÉ DE FABRICATION D'UN ROTOR À AUBAGE INTÉGRAL POUR UN MOTEUR À TURBINE À GAZ

(30) Priority: 02.11.2017 US 201762580843 P; 24.10.2018 US 201816169353
(43) Date of publication of application: 08.05.2019
(73) Proprietor: RTX Corporation, Farmington, CT 06032 (US)
(72) Inventor: SCHUTTE, Peter T., Manchester, CT Connecticut 06040 (US)
(74) Representative: Dehns

(56) References cited:
- EP-A1- 3 118 412
- EP-A1- 3 431 713
- EP-A1- 3 473 431
- EP-A2- 1 087 100
- EP-A2- 1 182 328
- JP-A- H0 544 691
- US-A- 5 244 345
- US-A1- 2009 246 032
- US-A1- 2011 064 583
- US-A1- 2016 208 626
- US-B1- 6 478 539

## Description

### TECHNICAL FIELD

The present invention relates to an integrally bladed rotor for a gas turbine engine and to a method of fabricating an integrally bladed rotor for a gas turbine engine.

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

The compressor and turbine sections include airfoils supported on rotors. The airfoils may be separate parts assembled to a rotor or may also be integrally formed as part of the rotor. Forming the rotor and airfoils as a single part reduces the number of parts and eliminates the need for fastening systems for securing airfoils to the rotor.

Turbine engine manufacturers continue to seek improvements to turbine engines including improvements in assembly, manufacture, engine performance and propulsive efficiencies.

A prior art integrally bladed rotor for a gas turbine engine having the features of the preamble of claims 1 and 4 is disclosed in JP H05 44691 A. Further prior art gas turbine engines are disclosed in EP 1 182 328 A2, US 2011/064583 A1, US 5 244 345 A, US 2009/246032 A1, US 6 478 539 B1, EP 1 087 100 A2, EP 3 118 412 A1 and US 2016/208626 A1.

### SUMMARY

In an aspect of the present invention, an integrally bladed rotor for a gas turbine engine is provided as set forth in claim 1.

In an embodiment, the patch portion includes a first fillet providing a smooth transition from a peripheral surface.

In another embodiment according to any of the previous embodiments, the patch portion is disposed on the suction side at the leading edge.

In another aspect of the present invention, a method of fabricating an integrally bladed rotor for a gas turbine engine is provided as set forth in claim 4.

In another embodiment according to any of the previous embodiments, forming the patch portion includes forming the patch portion on the suction side at the leading edge and spaced apart from the trailing edge.

In another embodiment according to any of the previous embodiments, forming the first thickness includes forming a first fillet between the peripheral surface and at least one of the pressure side and suction side of the airfoil to have a first radius and forming a second fillet radially outward from the first fillet to have a second radius smaller than the first radius.

In another embodiment according to any of the previous embodiments, forming the first fillet to extend radially from the peripheral surface a first distance to an interface and forming the second fillet to begin at the interface.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a perspective view of an example integrally bladed rotor.
Figure 3 is a perspective view of an example airfoil outside the wording of the claims.
Figure 4 is a cross-sectional view of a portion of the example airfoil outside the wording of the claims.
Figure 5 is an enlarged perspective view of a portion of an example airfoil outside the wording of the claims.
Figure 6 is another perspective view of an example airfoil outside the wording of the claims.
Figure 7 is a perspective view of an airfoil embodiment in accordance with the present invention.
Figure 8 is a cross-sectional view of a portion of the airfoil shown in Figure 7.
Figure 9 is a cross-section of another portion of the airfoil shown in Figure 7.

### DETAILED DESCRIPTION

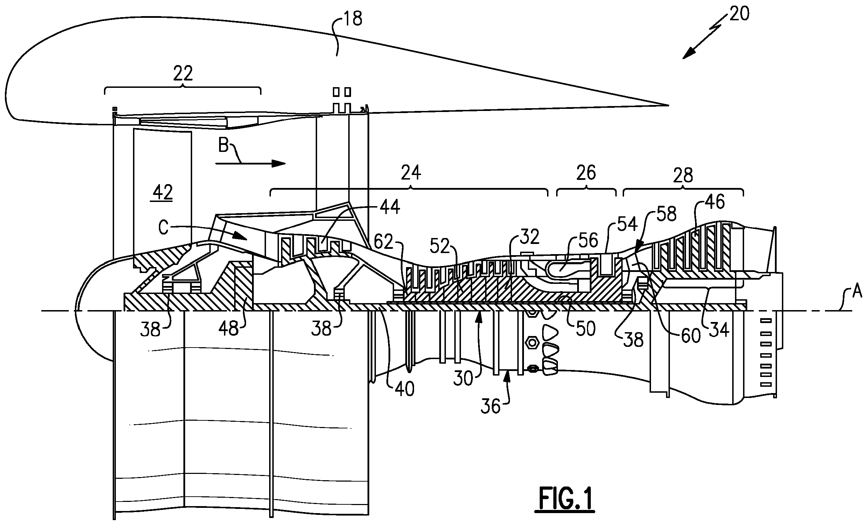

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 18, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle.

The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} where °R = K × 9/5. The "Low corrected fan tip speed" as disclosed herein according to one non-limiting embodiment is less than about 1150 ft / second (350.5 meters/second).

The example gas turbine engine includes the fan 42 that comprises in one non-limiting embodiment less than about twenty-six fan blades. In another non-limiting embodiment, the fan section 22 includes less than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

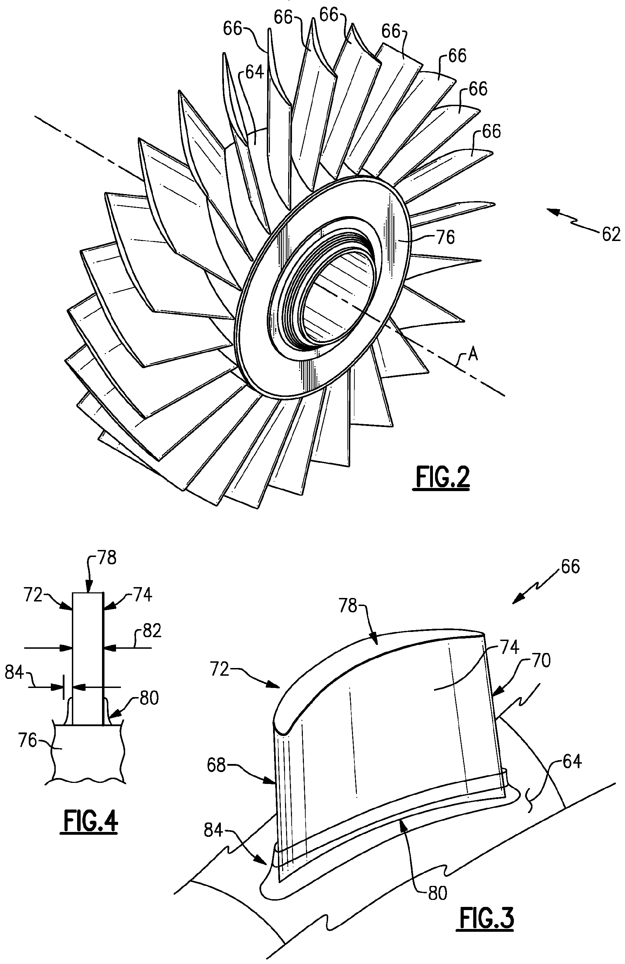

Referring to Figure 2 with continued reference to Figure 1, the example gas turbine engine 20 includes the compressor section 52 that includes a plurality of integrally bladed rotors 62 (IBR). Each of the IBRs 62 includes a rotor portion 76 defining a peripheral surface 64. A plurality of airfoils 66 extend upward from the peripheral surface 64. The IBR 62 is a one-piece part with portions that define, among other features, the rotor portion 76, peripheral surface 64 and the airfoils 66.

Referring to Figure 3, which shows an example outside the wording of the claims, with continued reference to Figure 2, each of the plurality of airfoils 66 includes a leading edge 68, a trailing edge 70, a pressure side 72 and a suction side 74. Each of the airfoils 66 extends radially outward from the peripheral surface 64 defined in the IBR 62. The airfoils 66 extend from a root portion 80 to a tip portion 78. The root portion 80 is defined at the peripheral surface 64 of the rotor portion 76. A thickness 84 is disposed near the root 80 and extends between the peripheral surface 64 and side surfaces of the airfoil 66.

Referring to Figure 4, which shows an example outside the wording of the claims, with continued reference to Figures 2 and 3, the example thickness 84 is disposed at the root portion 80 about the airfoil 66 and provides a boundary to prevent crack propagation from the airfoil 66 into the rotor portion 76 of the IBR 62. In this example, the thickness 84 extends outward from an airfoil thickness 82 defined between the pressure side 72 and the suction side 74.

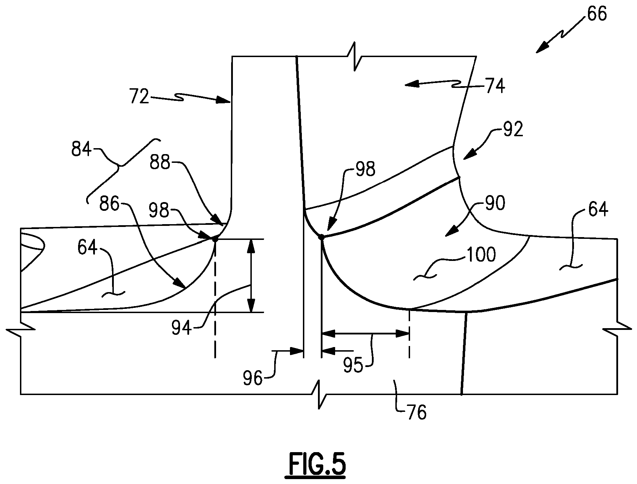

Referring to Figure 5, which shows an example outside the wording of the claims, with continued reference to Figures 3 and 4, the first thickness 84 includes a first fillet 86 that extends from the rotor peripheral surface 64 to an interface 98 and a second fillet 88 that extends radially outward from the interface 98. The first fillet 86 includes a transition surface 100 that extends a distance 95 from the peripheral surface 64 to the interface 98. The interface 98 is disposed a distance 94 above the peripheral surface 64 and a width 96 away from the pressure side 72 and suction side 74 of the airfoil 66. The width 96 is less than the distance 95. The disclosed interface 98 is the interface between the first fillet 86 and the second fillet and is the location where the surface 100 transitions from a first radius 90 to a second radius 92. Accordingly, the second fillet 88 begins at the interface 98 and extends upward radially at the second radius 92 into a smooth transition that merges with the pressure and suction surfaces of the airfoil 66.

In the disclosed example, the first radius 90 is larger than the second radius 92. In one disclosed example, the first radius 90 is between one third and one half greater than the second radius 92. In another disclosed example, the first radius 90 is about 0.120 inches (3.048 mm) and the second radius is 0.080 inches (2.032 mm). In another disclosed example the first radius is about 0.090 inches (2.286 mm) and the second radius is about 0.050 inches (1.27 mm). In another disclosed dimensional example, the first radius is about 0.150 inches (3.81 mm) and the second radius is about 0.0120 inches (0.3048 mm). Moreover, in one example, the width 96 is between about 0.010 inches (0.254 mm) and 0.030 inches (0.762 mm). In other disclosed example the width 96 is about 0.020 inches (0.508 mm). It should be understood, that the disclosed dimensional example is provided by way of example and other radiuses and widths could be utilized and are within the contemplation of this disclosure.

It should be understood that although dimensional examples are disclosed by way of example, the first fillet 86 is larger than the second fillet 88. The specific relative size between the first fillet 86 and the second fillet 88 may be different to provide a predefined stress propagation path that prevents crack propagation radially inward into the rotor portion 76.

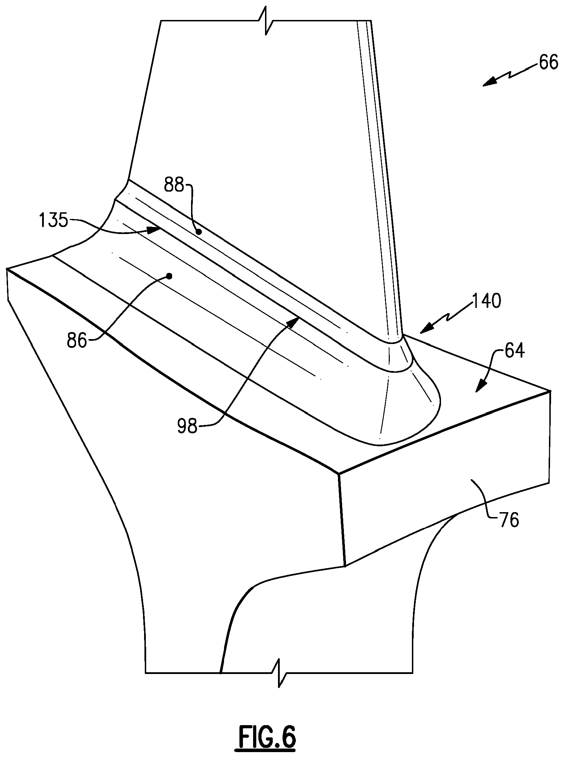

Referring to Figure 6, which shows an example outside the wording of the claims, with continued reference to Figure 5, the separation at the interface 98 between the first fillet 86 and the second fillet 88 defines a crack propagation boundary schematically shown at 135. A potential crack schematically referred to as 140 is prevented from propagating radially inward toward the rotor portion 76 by the thicker portions of the airfoil defined by the first fillet 86. Instead, the crack 140 propagates in direction substantially along and parallel to the interface 98. Accordingly, the interface 98 defines the crack propagation boundary and prevents cracks from propagating into the rotor portion 76.

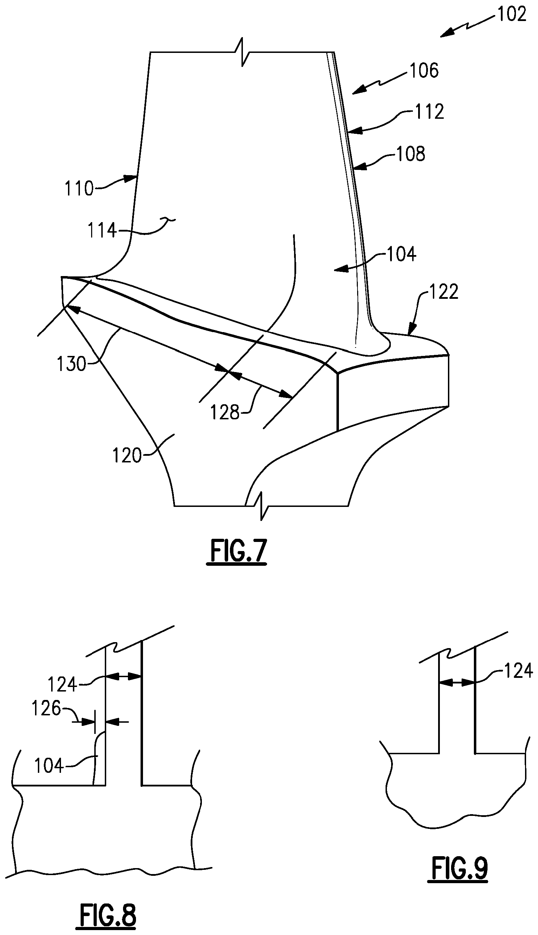

Referring to Figures 7, 8 and 9, an IBR 102 embodiment in accordance with the present invention is schematically illustrated and includes an airfoil 106 with a suction side 112 and a pressure side 114 that extends between a leading edge 108 and a trailing edge 110. The airfoil 106 extends upward from a rotor peripheral surface 122 and includes a patch portion 104. In this example, the patch portion 104 is disposed on the pressure side 114 and extends a distance 128 from the leading edge 108 toward the trailing edge 110. The patch 104 is therefore spaced apart a distance 130 away from the trailing edge 110. The patch 104 is disposed at a location between the airfoil 106 and peripheral surface 122 that defines a boundary that prevents crack propagation into the rotor portion 120. Moreover, the area of the increased thickness 126 provided by the patch 104 is based on stress analysis of potential crack propagation and may vary in location and thickness.

The patch 104 is an increased thickness indicated at 126 (Figure 8) that is greater than the airfoil thickness 124. The airfoil thickness 124 may vary depending on the airfoil shape between the leading edge and the trailing edge. The patch portion 104 includes a thickness 126 in addition to the airfoil thickness 124 of the airfoil 106 in a specific location near the leading edge 108. The location of the thickness 126 is provided based on analysis of stresses inflicted on the airfoil 106 during operation. The increased thickness 126 is shown on one side of the airfoil 106, but may extend to both sides of the airfoil 106. Moreover, the patch 104 may extend different distances 128 toward the trailing edge 110 as determined to define a boundary to possible crack propagation radially inward. Moreover, the increased thickness 126 provided by the patch 104 could be spaced from the leading edge 108 or any position along the interface between the peripheral surface 122 and the airfoil 106 where a reduction in operating stress is required to direct crack propagation away from the rotor portion 120.

Accordingly, the example disclosed IBR 62 includes airfoils 66, 106 with features that define crack propagation boundaries to prevent cracks from propagating radially inward to into rotor portions.

Although an example embodiment has been disclosed, a worker of ordinary skill in this art would recognize that certain modifications would come within the scope of this disclosure. For that reason, the following claims should be studied to determine the scope and content of this invention.

## Claims

1. An integrally bladed rotor (62; 102) for a gas turbine engine (20) comprising:
a rotor portion (120) with a peripheral surface (122);
at least one airfoil (106) including a suction side (112) and a pressure side (114) extending between a leading edge (108) and a trailing edge (110), the at least one airfoil (106) extending radially from the peripheral surface (122), the airfoil (106) including an airfoil thickness (124) between the pressure side (114) and the suction side (112); and
a patch portion (104) disposed at a location between the airfoil (106) and the peripheral surface (122) that defines a boundary that prevents crack propagation into the rotor portion (120), on one of the suction side (112) and the pressure side (114), the patch portion (104) including a first thickness (126) in addition to the airfoil thickness (124),
**characterized in that**:
the patch portion (104) extends partway between the leading edge (108) and the trailing edge (110) and is spaced apart from the trailing edge (110) and/or the leading edge (108).

2. The integrally bladed rotor as recited in claim 1, wherein the patch portion (104) includes a first fillet providing a smooth transition from the peripheral surface (122).

3. The integrally bladed rotor as recited in claim 1 or 2, wherein the patch portion (104) is disposed on the suction side (112) at the leading edge (108).

4. A method of fabricating an integrally bladed rotor (62; 102) for a gas turbine engine (20) comprising:
forming a rotor portion (120) with a peripheral surface (122);
forming at least one airfoil (106) extending radially from the peripheral surface (122) to include a suction side (112) and a pressure side (114) extending between a leading edge (108) and a trailing edge (110), wherein the at least one airfoil (106) is formed to include an airfoil thickness (124) between the pressure side (114) and the suction side (112); and
forming a first thickness (126) on at least one of the pressure side (114) and suction side (112) of the airfoil (106) in addition to the airfoil thickness (124), including forming the first thickness (126) as a patch portion (104) disposed at a location between the airfoil (106) and the peripheral surface (122) that defines a boundary that prevents crack propagation into the rotor portion (120), on one of the suction side (112) and the pressure side (114),
**characterized in that**:
the patch portion (104) extends partway between the leading edge (108) and the trailing edge (110) and is spaced apart from the trailing edge (110) and/or the leading edge (108).

5. The method as recited in claim 4, wherein forming the patch portion (104) includes forming the patch portion (104) on the suction side (112) at the leading edge (108) and spaced apart from the trailing edge (110).

6. The method as recited in claim 4 or 5, wherein forming the first thickness (126) comprises forming a first fillet between the peripheral surface (122) and at least one of the pressure side (114) and suction side (112) of the airfoil (106) to have a first radius and forming a second fillet radially outward from the first fillet to have a second radius smaller than the first radius.

7. The method as recited in claim 6, wherein forming the first thickness (126) further comprises forming the first fillet to extend radially from the peripheral surface (122) a first distance (128) to an interface and forming the second fillet to begin at the interface.

## Patentansprüche

1. Integral beschaufelter Rotor (62; 102) für ein Gasturbinentriebwerk (20), umfassend:
einen Rotorabschnitt (120) mit einer peripheren Fläche (122);
mindestens ein Schaufelblatt (106), das eine Saugseite (112) und eine Druckseite (114) beinhaltet, die sich zwischen einer Vorderkante (108) und einer Hinterkante (110) erstrecken, wobei sich das mindestens eine Schaufelblatt (106) radial von der peripheren Fläche (122) erstreckt, wobei das Schaufelblatt (106) eine Schaufelblattdicke (124) zwischen der Druckseite (114) und der Saugseite (112) beinhaltet; und
einen Instandhaltungsabschnitt (104), der an einer Stelle zwischen dem Schaufelblatt (106) und der peripheren Fläche (122), die eine Rissausbreitung in den Rotorabschnitt (120) verhindernde Grenze definiert, auf einer von der Saugseite (112) und der Druckseite (114) angeordnet ist, wobei der Instandhaltungsabschnitt (104) zusätzlich zu der Schaufelblattdicke (124) eine erste Dicke (126) beinhaltet,
**dadurch gekennzeichnet, dass**:
sich der Instandhaltungsabschnitt (104) teilweise zwischen der Vorderkante (108) und der Hinterkante (110) erstreckt und von der Hinterkante (110) und/oder der Vorderkante (108) beabstandet ist.

2. Integral beschaufelter Rotor nach Anspruch 1, wobei der Instandhaltungsabschnitt (104) eine erste Ausrundung beinhaltet, die einen nahtlosen Übergang von der peripheren Fläche (122) bereitstellt.

3. Integral beschaufelter Rotor nach Anspruch 1 oder 2, wobei der Instandhaltungsabschnitt (104) auf der Saugseite (112) an der Vorderkante (108) angeordnet ist.

4. Verfahren zum Herstellen eines integral beschaufelten Rotors (62; 102) für ein Gasturbinentriebwerk (20), umfassend:
Bilden eines Rotorabschnitts (120) mit einer peripheren Fläche (122) ;
Bilden mindestens eines Schaufelblatts (106), das sich unter Beinhalten einer Saugseite (112) und einer Druckseite (114), die sich zwischen einer Vorderkante (108) und einer Hinterkante (110) erstrecken, radial von der peripheren Fläche (122) erstreckt, wobei das mindestens eine Schaufelblatt (106) unter Beinhalten einer Schaufelblattdicke (124) zwischen der Druckseite (114) und der Saugseite (112) gebildet wird; und
Bilden einer ersten Dicke (126) auf mindestens einer von der Druckseite (114) und der Saugseite (112) des Schaufelblatts (106) zusätzlich zu der Schaufelblattdicke (124), was Bilden der ersten Dicke (126) als einen Instandhaltungsabschnitt (104) beinhaltet, der an einer Stelle zwischen dem Schaufelblatt (106) und der peripheren Fläche (122), die eine Rissausbreitung in den Rotorabschnitt (120) verhindernde Grenze definiert, auf einer von der Saugseite (112) und der Druckseite (114) angeordnet ist,
**dadurch gekennzeichnet, dass**:
sich der Instandhaltungsabschnitt (104) teilweise zwischen der Vorderkante (108) und der Hinterkante (110) erstreckt und von der Hinterkante (110) und/oder der Vorderkante (108) beabstandet ist.

5. Verfahren nach Anspruch 4, wobei das Bilden des Instandhaltungsabschnitts (104) Bilden des Instandhaltungsabschnitts (104) auf der Saugseite (112) an der Vorderkante (108) und von der Hinterkante (110) beabstandet beinhaltet.

6. Verfahren nach Anspruch 4 oder 5, wobei das Bilden der ersten Dicke (126) Bilden einer ersten Ausrundung zwischen der peripheren Fläche (122) und mindestens einer von der Druckseite (114) und der Saugseite (112) des Schaufelblatts (106) unter Aufweisen eines ersten Radius und Bilden einer zweiten Ausrundung radial nach außen von der ersten Ausrundung unter Aufweisen eines zweiten Radius, der kleiner ist als der erste Radius, umfasst.

7. Verfahren nach Anspruch 6, wobei das Bilden der ersten Dicke (126) ferner Bilden der ersten Ausrundung derart, dass sie sich radial von der peripheren Fläche (122) über eine erste Strecke (128) zu einer Grenzfläche erstreckt, und Bilden der zweiten Ausrundung derart, dass sie an der Grenzfläche beginnt, umfasst.

## Revendications

1. Rotor à aubage intégral (62 ; 102) pour un moteur à turbine à gaz (20) comprenant :
une partie rotor (120) avec une surface périphérique (122) ;
au moins un profil aérodynamique (106) comportant un côté aspiration (112) et un côté pression (114) se prolongeant entre un bord d'attaque (108) et un bord de fuite (110), l'au moins un profil aérodynamique (106) se prolongeant radialement à partir de la surface périphérique (122), le profil aérodynamique (106) comportant une épaisseur de profil aérodynamique (124) entre le côté pression (114) et le côté aspiration (112) ; et
une partie de patch (104) disposée à un emplacement entre le profil aérodynamique (106) et la surface périphérique (122) qui définit une limite qui empêche la propagation de fissures dans la partie rotor (120), sur l'un du côté aspiration (112) et du côté pression (114), la partie de patch (104) comportant une première épaisseur (126) en plus de l'épaisseur du profil aérodynamique (124),
**caractérisé en ce que** :
la partie de patch (104) se prolonge à mi-chemin entre le bord d'attaque (108) et le bord de fuite (110) et est espacée du bord de fuite (110) et/ou du bord d'attaque (108).

2. Rotor à aubage intégral selon la revendication 1, dans lequel la partie de patch (104) comporte un premier congé fournissant une transition douce à partir de la surface périphérique (122).

3. Rotor à aubage intégral selon la revendication 1 ou 2, dans lequel la partie de patch (104) est disposée sur le côté aspiration (112) au niveau du bord d'attaque (108).

4. Procédé de fabrication d'un rotor à aubage intégral (62 ; 102) pour un moteur à turbine à gaz (20) comprenant :
la formation d'une partie rotor (120) avec une surface périphérique (122) ;
la formation d'au moins un profil aérodynamique (106) se prolongeant radialement à partir de la surface périphérique (122) pour comporter un côté aspiration (112) et un côté pression (114) se prolongeant entre un bord d'attaque (108) et un bord de fuite (110), dans lequel l'au moins un profil aérodynamique (106) est formé pour comporter une épaisseur de profil aérodynamique (124) entre le côté pression (114) et le côté aspiration (112) ; et
la formation d'une première épaisseur (126) sur au moins l'un du côté pression (114) et du côté aspiration (112) du profil aérodynamique (106) en plus de l'épaisseur du profil aérodynamique (124), comprenant la formation de la première épaisseur (126) sous la forme d'une partie de patch (104) disposée à un emplacement entre le profil aérodynamique (106) et la surface périphérique (122) qui définit une limite qui empêche la propagation de fissures dans la partie rotor (120), sur l'un du côté aspiration (112) et du côté pression (114),
**caractérisé en ce que** :
la partie de patch (104) se prolonge à mi-chemin entre le bord d'attaque (108) et le bord de fuite (110) et est espacée du bord de fuite (110) et/ou du bord d'attaque (108).

5. Procédé selon dans la revendication 4, dans lequel la formation de la partie de patch (104) comporte la formation de la partie de patch (104) sur le côté aspiration (112) au niveau du bord d'attaque (108) et espacée du bord de fuite (110) .

6. Procédé selon la revendication 4 ou 5, dans lequel la formation de la première épaisseur (126) comprend la formation d'un premier congé entre la surface périphérique (122) et au moins l'un du côté pression (114) et du côté aspiration (112) du profil aérodynamique (106) pour avoir un premier rayon et la formation d'un second congé radialement vers l'extérieur à partir du premier congé pour avoir un second rayon plus petit que le premier rayon.

7. Procédé selon la revendication 6, dans lequel la formation de la première épaisseur (126) comprend également la formation du premier congé pour se prolonger radialement de la surface périphérique (122) sur une première distance (128) à une interface et la formation du second congé pour commencer à l'interface.
